Europäisches Patentamt

European Patent Office

Office européen des brevets

(19)

(11) EP 0 895 604 B1

(12) **EUROPÄISCHE PATENTSCHRIFT**

(45) Veröffentlichungstag und Bekanntmachung des Hinweises auf die Patenterteilung:
**08.12.1999 Patentblatt 1999/49**

(21) Anmeldenummer: **97916312.8**

(22) Anmeldetag: **06.02.1997**

(51) Int Cl.$^6$: **G01S 17/06**, G01S 17/36

(86) Internationale Anmeldenummer:
**PCT/DE97/00222**

(87) Internationale Veröffentlichungsnummer:
**WO 97/40404 (30.10.1997 Gazette 1997/46)**

(54) **VERFAHREN UND MESSEINRICHTUNG ZUR BESTIMMUNG DER LAGE EINES OBJEKTS**

MEASUREMENT PROCESS AND DEVICE FOR DETERMINING THE POSITION OF AN OBJECT

PROCEDE ET DISPOSITIF DE MESURE POUR DETERMINER LA POSITION D'UN OBJET

(84) Benannte Vertragsstaaten:
**CH DE ES FR GB IT LI**

(30) Priorität: **23.04.1996 DE 19616038**

(43) Veröffentlichungstag der Anmeldung:
**10.02.1999 Patentblatt 1999/06**

(73) Patentinhaber: **ROBERT BOSCH GMBH**
**70442 Stuttgart (DE)**

(72) Erfinder:
• **WINNER, Hermann**
  **D-76229 Karlsruhe (DE)**
• **GAILLARD, Alain**
  **D-76133 Karlsruhe (DE)**
• **UHLER, Werner**
  **D-76646 Bruchsal (DE)**

(56) Entgegenhaltungen:
**EP-A- 0 479 273          GB-A- 2 131 642**

• **PROCEEDINGS OF THE INTERNATIONAL CONFERENCE ON ROBOTICS AND AUTOMAT, ATLANTA, MAY 2 - 6, 1993, Bd. 3, 2.Mai 1993, INSTITUTE OF ELECTRICAL AND ELECTRONICS ENGINEERS, Seiten 652-658, XP000409872 CHEN Y D ET AL: "DYNAMIC CALIBRATION AND COMPENSATION OF A 3D LASER RADAR SCANNING SYSTEM"**
• **PROCEEDINGS SPIE, CONFERENCE ON LASER DIMENSIONAL METROLOGY, RECENT ADVANCES FOR INDUSTRIAL APPLICATION, Bd. 2088, - 7.Oktober 1993 BRIGHTON,UK, Seiten 59-68, XP000677571 MARSZALEC ET AL: "PERFORMNACE TESTS OF AN ANGULAR SCAN LED ARRAY-BASED RANGE IMAGING SENSOR" in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Bestimmung der Lage eines Objekts in bezug auf eine Meßeinrichtung mit einem optischen Sender, der einen Lichtstrahl unter einem sich verändernden Sendewinkel emittiert, und mit einem vom Sender beabstandeten winkelauflösenden optischen Empfänger, wobei aus dem jeweiligen Sendewinkel und dem jeweiligen Winkel, unter dem der Empfänger von dem Objekt reflektierte Strahlung empfängt (Empfangswinkel), geschlossen wird, in welcher von durch die Winkelauflösung des Senders und des Empfängers gegebenen Auflösungszelle sich das Objekt befindet.

Zur Bestimmung der Lage eines Objektes ist unter anderem ein optisches Triangulationsverfahren nach der Gattung des Hauptanspruches bekannt und beispielsweise beschrieben in: J.A. Marzalee, R.A. Myllyla: Performance test of an angular scan LED array-based range imaging sensor, Proc. Of the SPIE - The International Society for Optical Engineering 2088 (1994) p. 59-68. Die Meßgenauigkeit solcher Verfahren kann bei hoher Winkelauflösung des Senders und des Empfängers recht genau sein, jedoch werden unter anderem aus Kostengründen Sender und Empfänger mit begrenzter Winkelauflösung verwendet. Dadurch ergeben sich relativ große Auflösungszellen, deren Ausdehnung in longitudinaler Richtung - senkrecht zur Achse Empfänger-Sender - mit zunehmender Entfernung von der Meßeinrichtung größer wird. Dadurch ist keine sehr genaue Ortsauflösung der Entfernungsmessung möglich.

GB 2 131 642 A beschreibt eine Meßeinrichtung zur Bestimmung der Lage eines Objekts in bezug auf diese Meßeinrichtung. Die bekannte Meßeinrichtung enthält einen optischen Sender, der mittels einer Reihe von Lichtquellen, die selektiv einschaltbar sind, einen Lichtstrahl unter sich veränderndem Sehwinkel emittiert, und einen winkelauflösenden, aus einer Reihe von opto-elektrischen Wandlern bestehenden optischen Empfänger, wobei aus der jeweils eingeschalteten Lichtquelle und aus dem opto-elektrischen Wandler, der jeweils von dem Objekt reflektierte Strahlung empfängt, auf die Auflösungszelle, in der sich das Objekt befindet, geschlossen wird. Die Kombinationen von Sende- und Empfangswinkeln werden in einer Speichermatrix abgelegt.

Aus der EP 0479 273 A2 geht ein Verfahren zur Bestimmung des Abstandes eines Objektes gegenüber einer Meßeinrichtung hervor, das auf dem Radarprinzip beruht. Dabei wird der Abstand des zu ortenden Objekts durch Phasenvergleich zwischen einem modulierten Sendesignal und einem am Objekt reflektierten Empfangssignal ermittelt.

Aufgabe der vorliegenden Erfindung ist es, ein einfach zu realisierendes optisches Triangulationsverfahren derart auszubilden, daß die Ortsauflösung für die Messung der Entfernung eines zu ortenden Objekts möglichst hoch ist.

Diese Aufgabe wird bei dem erfindungsgemäßen Verfahren dadurch gelöst, daß der vom Sender emittierte Lichtstrahl moduliert wird, daß die Phasendifferenz zwischen der Modulation des gesendeten Lichtstrahls und der Modulation der empfangenen Strahlung gemessen wird, daß die einzelnen Auflösungszellen durch diskrete Sendewinkel und Empfangswinkel definiert sind, wobei zu jeder Kombination von diskreten Sende- und Empfangswinkeln eine Adresse eines Speichers gehört, unter der eine zugehörige Phasendifferenz und ein Abstand von der Meßeinrichtung abgespeichert ist, und daß die Lage des Objekts innerhalb einer Auflösungszelle aus der gemessenen Phasendifferenz und aus zu der Auflösungszelle im Speicher abgelegten Phasendifferenz- und Abstandswerten ermittelt wird. Durch das erfindungsgemäße Verfahren findet eine wesentliche Erhöhung der Ortsauflösung statt, insbesondere für Entfernungen, die größer als der Abstand zwischen Sender und Empfänger sind. Das erfindungsgemäße Verfahren hat ferner den Vorteil, daß es nur einen äußerst geringen Mehraufwand gegenüber den bekannten Triangulationsverfahren benötigt. Das erfindungsgemäße Verfahren kann für verschiedene Aufgaben eingesetzt werden. So eignet es sich zum Beispiel für die Realisierung eines Abstandwarngerätes für Kraftfahrzeuge.

Vorteilhafte Weiterbildungen der Erfindung gehen aus den Unteransprüchen hervor.

Eine erste Methode, um den Abstand eines Objekts gegenüber der Meßeinrichtung zu ermitteln, besteht darin, daß zu der jeweiligen Auflösungszelle, in der sich das Objekt befindet, die Abstände $d_1$ und $d_2$ und Phasendifferenzen $\gamma_1$ und $\gamma_2$ des zur Meßeinrichtung nächsten und entferntesten Punktes aus dem Speicher herausgelesen werden und daß aus diesen Abständen $d_1$, $d_2$ und Phasendifferenzen $\gamma_1$, $\gamma_2$ und der gemessenen Phasendifferenz y der Abstand d des Objekts gegenüber der Meßeinrichtung nach der Gleichung $d = d_1 + (d_2 - d_1) * (\gamma - \gamma_1) / (\gamma_2 - \gamma_1)$ berechnet wird.

Eine zweite Methode zur Ermittlung des Abstandes eines Objektes gegenüber der Meßeinrichtung besteht darin, daß zu der jeweiligen Auflösungszelle, in der sich das Objekt befindet, der Abstand $d_1$ und die Phasendifferenz $\gamma_1$ des zur Meßeinrichtung nächstliegenden Punktes aus dem Speicher herausgelesen werden, und daß aus dem Abstand $d_1$, der Phasendifferenz $\gamma_1$ und der gemessenen Phasendifferenz $\gamma$ der Abstand d des Objekts gegenüber der Meßeinrichtung nach der Gleichung $d = d_1 + (\gamma - \gamma_1) * c/2\pi f$ berechnet wird, wobei c die Lichtgeschwindigkeit und f die Modulationsfrequenz ist.

Eine Eindeutigkeit der Phasendifferenz kann bei dem erfindungsgemäßen Verfahren dadurch gewährt werden, daß die Modulation mit einer Frequenz erfolgt, die einer Wellenlänge von mindestens dem Vierfachen der Länge der längsten zu erfassenden Auflösungszelle entspricht.

Ausführungsbeispiele der Erfindung sind in der Zeichnung anhand mehrerer Figuren dargestellt und in der nachfolgenden Beschreibung näher erläutert. Es zeigen:

Fig. 1 eine schematische Darstellung zu Erfassung eines Objekts durch einen Sender und einen Empfänger nach dem erfindungsgemäßen Verfahren,

Fig. 2     eine schematische Darstellung und ein Blockschaltbild einer erfindungsgemäßen Einrichtung,

Fig. 3     Spannungszeitdiagramme zur Erläuterung der Phasenvergleichsschaltung in der Meßeinrichtung in Fig. 2,

Fig. 4     ein Diagramm zur Abhängigkeit der Ausgangsspannung der Phasenvergleichsschaltung von der Phasendifferenz und

Fig. 5     eine vereinfachte Darstellung einer Tabelle zur Auswertung des Sende- und des Empfangswinkels.

Gleiche Teile sind in den Figuren mit gleichen Bezugszeichen versehen.

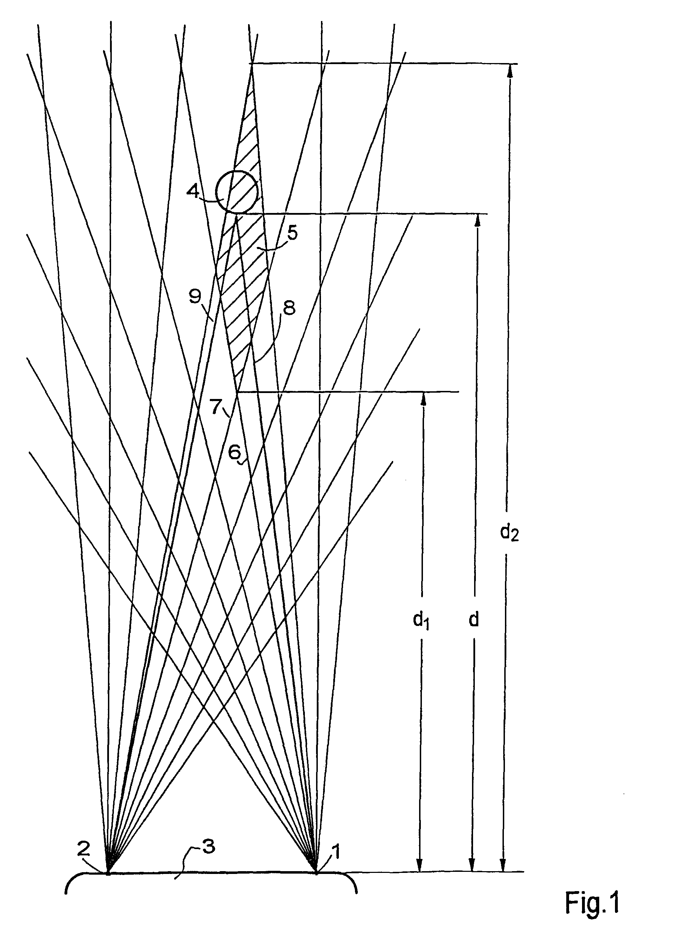

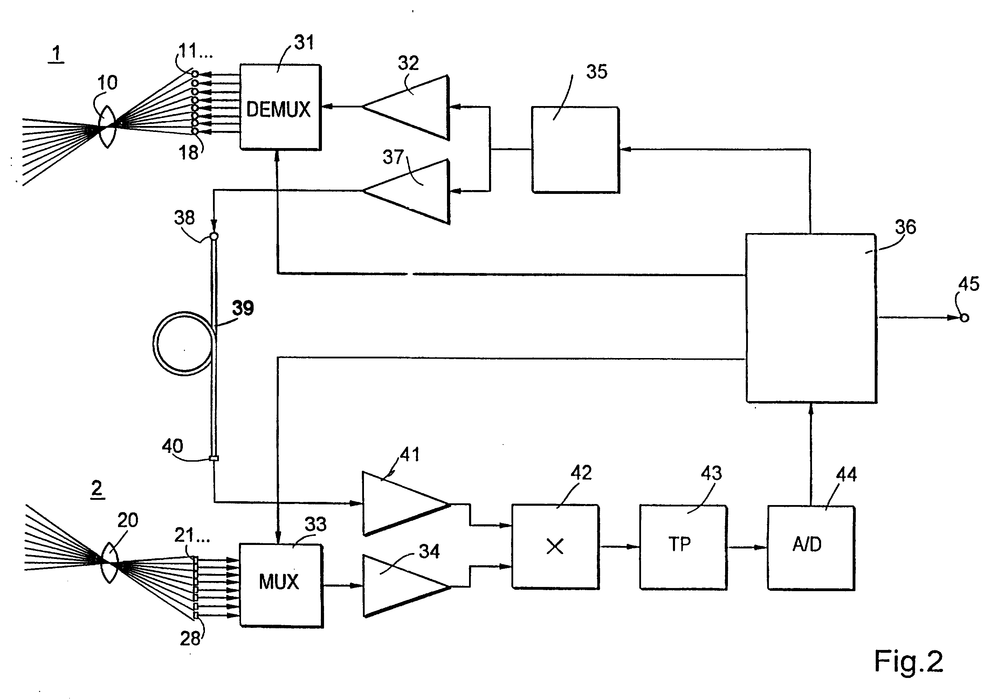

Fig. 1 zeigt schematisch einen Sender 1 und einen Empfänger 2, die in einem vorgegebenen Abstand an einer lediglich angedeuteten Meßeinrichtung 3 angeordnet sind. Die von dem Sender 1 und dem Empfänger 2 ausgehenden Linien stellen die Grenzen jeweils eines divergierenden Strahls des Senders 1 bzw. eines aufzulösenden Empfangswinkels des Empfängers 2 dar. Bei einer Realisierung des Senders 1 und des Empfängers 2 mit jeweils einer Sammellinse und diskreten Lichtquellen bzw. opto-elektrischen Wandlern, wie es im Zusammenhang mit Fig. 2 später erläutert wird, können zwischen den einzelnen divergierenden Sendestrahlen und den Empfangswinkeln jeweils Zwischenräume liegen. Da die zu erfassenden Objekte meistens größer als eine Auflösungszelle sind bzw. größer als die Zwischenräume, tritt hierdurch jedoch keine Beeinträchtigung des erfindungsgemäßen Verfahrens auf.

Mit dem bekannten Verfahren kann lediglich festgestellt werden, daß ein Objekt 4 innerhalb mindestens einer Auflösungszelle 5 liegt. Mit zunehmendem Abstand von der Meßeinrichtung 3 werden diese Auflösungszellen länger, so daß die Auflösung abnimmt. Mit dem bekannten Verfahren wird also lediglich ermittelt, daß der Abstand d des Objekts von der Meßeinrichtung 3 zwischen den Werten $d_1$ und $d_2$ liegt.

Durch die Modulation des vom Sender emittierten Lichts und die Messung der Phasendifferenz kann die Laufzeitdifferenz und damit auch die Längendifferenz zwischen einer Strecke aus den gedachten Strahlen 6 und 7 und einer Strecke aus den Strahlen 8 und 9 bestimmt werden. Da es bei dem erfindungsgemäßen Verfahren im wesentlichen auf die Verbesserung der bei großen Abständen vorliegenden Längenauflösung ankommt, kann bei dem erfindungsgemäßen Verfahren bei der Auswertung dieser Laufzeitdifferenz anstelle einer genauen trigonometrischen Berechnung ein von der Meßeinrichtung zum Objekt und zurück laufender Strahl berücksichtigt werden. Die sich dann ergebenden einfachen geometrischen Zusammenhänge werden später erläutert.

Die schematische Darstellung gemäß Fig. 2 zeigt einen Sender 1 mit einer Sammellinse 10 und mit acht lichtemittierenden Dioden 11 bis 18, die dicht nebeneinander in einer Reihe angeordnet sind. Der Empfänger umfaßt eine Sammellinse 20 und acht in einer Reihe angeordnete opto-elektrische Wandler 21 bis 28, insbesondere Photodioden oder Phototransistoren.

Ein Demultiplexer 31 leitet die Ausgangsspannung einer Endstufe 32 sequentiell zu den einzelnen lichtemittierenden Dioden 11 bis 18 weiter. In entsprechender Weise ist ein Multiplexer 33 vorgesehen, der zeitsequentiell jeweils eine der Photodioden 21 bis 28 mit dem Eingang eines Vorverstärkers 34 verbindet. Zur Modulation des vom Sender 1 abgestrahlten Lichts wird der Endstufe 32 eine pulsierende Spannung zugeführt, deren Frequenz von der Größe der Auflösungszellen abhängt, die wiederum von dem Abstand zwischen Sender und Empfänger und dem Meßbereich der Meßeinrichtung abhängig ist. Bei Abständen von einigen Dezimetern und Meßbereichen bis zu 10m kommen Frequenzen im Bereich von 10 MHz bis 100 MHz in Frage. Die der Endstufe 32 zugeführten Impulse werden von einem Taktgenerator 35 erzeugt, der wiederum von einem Mikroprozessor 36 gesteuert wird.

Um Phasendifferenzen zwischen der Modulation des gesendeten und des empfangenen Lichts messen zu können, wird ein Referenzsignal benötigt, dessen Phasenlage unabhängig von dem jeweiligen Abstand ist. Dieses wird bei dem Ausführungsbeispiel dadurch erzeugt, daß das Ausgangssignal des Taktgenerators über eine weitere Endstufe 37, eine weitere lichtemittierende Diode 38, einen Lichtleiter 39, eine Photodiode 40 und einen Vorverstärker 41 geleitet wird. Die Ausgangssignale $S_e$ und $S_s$ der Vorverstärker 34 und 41 werden einem Phasenvergleicher zugeführt, der aus einem Multiplizierer 42 und einem Tiefpaß 43 besteht.

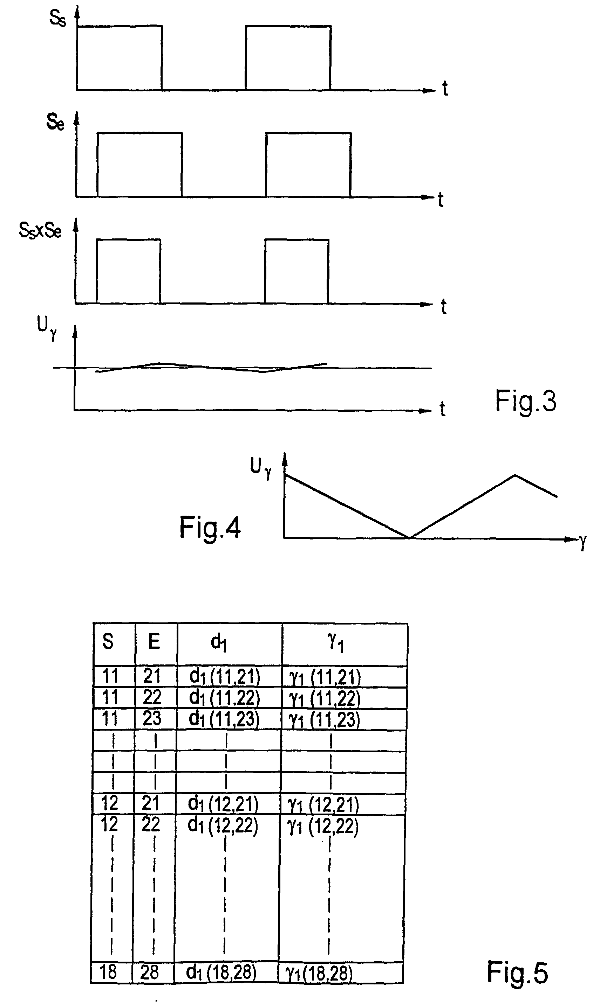

Die Funktion des Phasenvergleichers wird anhand der Diagramme nach Fig. 3 erläutert, wobei die Signale $S_s$ und $S_e$ eine Phasendifferenz y aufweisen. Diese wird als die zu messende Phasendifferenz zwischen der Modulation am Sender und der Modulation am Empfänger unter Berücksichtigung der Laufzeiten in den verschiedenen Schaltungen und im Lichtleiter 39 weiterverarbeitet. Das Produkt $S_e \bullet S_s$ weist ein Tastverhältnis auf, das sich mit der Phasendifferenz y ändert. Am Ausgang des Tiefpasses 43, der als Integrator wirkt, steht dann somit eine Spannung $U_\gamma$ zur Verfügung, die außer einer leichten Welligkeit die jeweilige Phasendifferenz darstellt. Fig. 4 stellt die Spannung $U_\gamma$ als Funk-

tion der Phasendifferenz dar.

Die Spannung $U_\gamma$ wird über einen A/D-Wandler 44 einem Eingang des Mikrocomputers 36 zugeleitet. Der Mikrocomputer 36 und damit auch die gesamte Meßeinrichtung 3 weist einen Ausgang 45 auf, an welchem Daten, welche die Lage von Objekten angeben, zur Verfügung stehen und zu entsprechenden Ausgabeeinrichtungen (beispielsweise zu einem Display) oder zu Verarbeitungseinrichtungen weitergeleitet werden können.

Der Mikrocomputer 36 steuert ferner den Demultiplexer 31 und den Multiplexer 33 derart, daß das von jeder lichtemittierenden Diode ausgesendete und von einem Objekt reflektierte Licht von jeder der Photodioden 21 bis 28 "abgefragt" wird.

Fig. 5 zeigt eine im Speicher des Mikrocomputers 36 (Fig. 2) abgelegte Tabelle, in welcher unter Adressen, welche die Kombinationen aus Sendewinkel und Empfangswinkel darstellen, der Abstand $d_1$ und der Phasenwinkel $\gamma_1$ abgelegt sind. Empfängt beispielsweise die Photodiode 22 reflektiertes Licht, während die lichtemittierende Diode 12 leuchtet, so wird für $d_1$ der Wert $d_1(1222)$ und für $\gamma_1$ der Wert $\gamma_1(1222)$ ausgelesen. Diese Werte können vorausberechnet und bei jeder Meßeinrichtung einer Serie gespeichert oder in einem Eichvorgang je individueller Meßeinrichtung ermittelt und gespeichert werden. Die Entfernung des Objekts 4 (Fig. 1) kann dann nach der Gleichung $d = d_1 + (\gamma - \gamma_1) \cdot c / (4\pi \cdot f)$ berechnet werden.

Bei optischen Meßverfahren, die auf dem Aussenden von Licht und Empfangen von reflektierten Licht beruhen, wird häufig das ausgesendete Licht moduliert, um Fremdlichteinflüsse zu unterdrücken. Dies kann bei dem erfindungsgemäßen Verfahren ebenfalls erfolgen. Sollte hierzu die erfindungsgemäße Modulation nicht ausreichen, so kann eine weitere Modulation durchgeführt werden, beispielsweise in einem wesentlich niedrigeren Frequenzbereich.

**Patentansprüche**

1. Verfahren zur Bestimmung der Lage eines Objekts (4) in Bezug auf eine Meßeinrichtung (3) mit einem optischen Sender, der einen Lichtstrahl (8) unter einem sich verändernden Sendewinkel emittiert, und mit einem vom Sender (1) beabstandeten winkelauflösenden optischen Empfänger (2), wobei aus dem jeweiligen Sendewinkel und dem jeweiligen Winkel, unter dem der Empfänger (2) von dem Objekt (4) reflektierte Strahlung empfängt (Empfangswinkel), geschlossen wird, in welcher von durch die Winkelauflösung des Senders (1) und des Empfängers (2) gegebenen Auflösungszelle (5) sich das Objekt (4) befindet, dadurch gekennzeichnet, daß der vom Sender (1) emittierte Lichtstrahl (8) moduliert wird, daß die Phasendifferenz zwischen der Modulation des gesendeten Lichtstrahls (8) und der Modulation der empfangenen Strahlung (9) gemessen wird, daß die einzelnen Auflösungszellen (5) durch diskrete Sendeweinkel und Empfangswinkel definiert sind, wobei zu jeder Kombination von diskreten Sende- und Empfangswinkeln eine Adresse eines Speichers (36) gehört, unter der eine zugehörige Phasendifferenz und ein Abstand von der Meßeinrichtung (3) abgespeichert ist, und daß die Lage des Objekts (4) innerhalb einer Auflösungszelle (5) aus der gemessenen Phasendifferenz und aus zu der Auflösungszelle im Speicher (36) abgelegten Phasendifferenz- und Abstandswerten ermittelt wird.

2. Verfahren nach Anspruch 1, dadurch gekennzeichnet, daß zu der jeweiligen Auflösungszelle, in der sich das Objekt (4) befindet, die Abstände d1 und d2 und Phasendifferenzen $\gamma$1 und $\gamma$2 des zur Meßeinrichtung (3) nächsten und entferntesten Punktes aus dem Speicher (36) herausgelesen werden und daß aus diesen Abständen $d_1$ und $d_2$ und Phasendifferenzen $\gamma_1$ und $\gamma_2$ der gemessenen Phasendifferenz $\gamma$ der Abstand d des Objekts (4) gegenüber der Meßeinrichtung nach der Gleichung $d = d_1 + (d_2 - d_1) * (\gamma - \gamma_1) / (\gamma_2 - \gamma_1)$ berechnet wird.

3. Verfahren nach Anspruch 1, dadurch gekennzeichnet, daß zu der jeweiligen Auflösungszelle (5), in der sich das Objekt (4) befindet, der Abstand $d_1$ und die Phasendifferenz $\gamma_1$ des zur Meßeinrichtung (3) nächstliegenden Punktes aus dem Speicher (36) herausgelesen werden und daß aus dem Abstand $d_1$, der Phasendifferenz $\gamma_1$ und der gemessenen Phasendifferenz $\gamma$ der Abstand d des Objekts (4) gegenüber der Meßeinrichtung (3) nach der Gleichung $d = d_1 + (\gamma - y_1) * c/2\pi f$ berechnet wird, wobei c die Lichtgeschwindigkeit und f die Modulationsfrequenz ist.

4. Verfahren nach Anspruch 1, dadurch gekennzeichnet, daß die Modulation mit einer Frequenz erfolgt, die einer Wellenlänge von mindestens dem Vierfachen der Länge der längsten zu erfassenden Auflösungszelle (5) entspricht.

**Claims**

1. Method for determining the position of an object (4) with reference to a measuring device (3) having an optical transmitter, which emits a light beam (8) at a varying transmitting angle, and having an angle-resolving optical receiver (2) spaced from the transmitter (1), it being deduced from the respective transmitting angle and the respective angle at which the receiver (2) receives radiation reflected from the object (4) (receiving angle) in which resolution cell (5) given by the angular resolution of the transmitter (1) and of the receiver (2) the object (4) is located, characterized in that the light beam (8) emitted by the transmitter (1) is modulated, in that the phase difference between the modulation of the transmitted light beam (8) and the modulation of the received radiation (9) is measured, in that the individual resolution cells (5) are defined by discrete transmitting angles and receiving angles, there belonging to each combination of discrete transmitting and receiving angles an address of a memory (36) under which an associated phase difference and a distance from the measuring device (3) are stored, and in that the position of the object (4) inside a resolution cell (5) is determined from the measured phase difference and from the phase-difference values and distance values stored in the memory (36) with reference to the resolution cell.

2. Method according to Claim 1, characterized in that in relation to the respective resolution cell in which the object (4) is located, the distances $d_1$ and d2 and phase differences $\gamma_1$ and $\gamma_2$ of the point nearest to and furthest from the measuring device (3) are read out from the memory (36), and in that the distance d of the object (4) from the measuring device is calculated from these distances $d_1$ and $d_2$ and phase differences $\gamma_1$ and $\gamma_2$ of the measured phase difference y using the equation $d = d_1 + (d_2 - d_1) * (\gamma - \gamma_1) / (\gamma_2 - \gamma_1)$.

3. Method according to Claim 1, characterized in that in relation to the respective resolution cell (5) in which the object (4) is located, the distance $d_1$ and the phase difference $\gamma_1$ of the point nearest the measuring device (3) is read out from the memory (36), and in that the distance d of the object (4) from the measuring device (3) is calculated from the distance $d_1$, the phase difference $\gamma_1$ and the measured phase difference $\gamma$ using the equation $d = d_1 + (\gamma - \gamma_1) * c/2\pi f$, c being the speed of light and f the modulation frequency.

4. Method according to Claim 1, characterized in that the modulation is performed at a frequency which corresponds to a wavelength of at least four times the length of the longest resolution cell (5) to be detected.

**Revendications**

1. Procédé servant à déterminer la position d'un objet (4) par rapport à un dispositif de mesure (3), comprenant un émetteur optique qui émet un rayon de lumière (8) sous un angle d'émission modifiable, et un récepteur optique (2) à résolution angulaire situé à une certaine distance de l'émetteur (1), procédé dans lequel, à partir de l'angle respectif d'émission et de l'angle respectif sous lequel le récepteur (2) reçoit le rayonnement réfléchi par l'objet (4) (angle de réception), on détermine dans quelle cellule de résolution (5), donnée par la résolution angulaire de l'émetteur (1) et du récepteur (2), se trouve l'objet (4),
caractérisé en ce que

- le rayon de lumière (8), qui est émis par l'émetteur (1), est modulé,
- la différence de phases entre la modulation du rayon de lumière émis (8) et la modulation du rayonnement reçu (9) est mesurée,
- les différentes cellules de résolution (5) sont définies par des angles d'émission et des angles de réception discrets, une adresse d'une mémoire (36) faisant partie de chaque combinaison d'angles discrets d'émission et de réception, adresse sous laquelle sont mises en mémoire une différence de phases correspondante et une distance par rapport au dispositif de mesure (3), et
- l'on détermine la position de l'objet (4) à l'intérieur d'une cellule de résolution (5) à partir de la différence de phases mesurée et à partir des valeurs de différences de phases et de distances, qui sont déposées dans la mémoire (36), par rapport à la cellule de résolution.

2. Procédé selon la revendication 1, caractérisé en ce que

- pour la cellule respective de résolution, dans laquelle se trouve l'objet (4), on extrait de la mémoire (36) les distances $d_1$ et $d_2$ et les différences de phase $\gamma_1$ et $\gamma_2$ du point le plus proche et du point le plus éloigné par rapport au dispositif de mesure (3), et
- à partir de ces distances $d_1$ et $d_2$ et des différences de phase $\gamma_1$ et $\gamma_2$ de la différence de phases mesurée $\gamma$, on calcule la distance d de l'objet (4) par rapport au dispositif de mesure, selon l'équation suivante :

$$d = d_1 + (d_2 - d_1) * (\gamma - \gamma_1) / (\gamma_2 - \gamma_1)$$

3. Procédé selon la revendication 1, caractérisé en ce que

- par rapport à la cellule de résolution correspondante (5), dans laquelle se trouve l'objet (4), on extrait de la mémoire (36) la distance $d_1$ et la différence de phase $\gamma_1$ du point qui est le plus proche du dispositif de mesure (3), et
- à partir de la distance $d_1$, de la différence de phase $\gamma_1$ et de la différence de phases $\gamma$ mesurée, on calcule la distance d de l'objet (4) par rapport au dispositif de mesure (3), selon l'équation suivante :

$$d = d_1 + (\gamma - \gamma_1) * c/2\pi f$$

équation dans laquelle c est la vitesse de la lumière et f la fréquence de modulation.

4. Procédé selon la revendication 1, caractérisé en ce que la modulation a lieu avec une fréquence qui correspond à une longueur d'onde au moins égale à quatre fois la longueur de la cellule de résolution (5) la plus longue à détecter.

Fig.1

Fig.2

EP 0 895 604 B1

$S_s$

$S_e$

$S_s \times S_e$

$U_\gamma$

Fig.3

$U_\gamma$

Fig.4

| S | E | $d_1$ | $\gamma_1$ |
|---|---|-------|------------|
| 11 | 21 | $d_1$ (11,21) | $\gamma_1$ (11,21) |
| 11 | 22 | $d_1$ (11,22) | $\gamma_1$ (11,22) |
| 11 | 23 | $d_1$ (11,23) | $\gamma_1$ (11,23) |
| | | | |
| | | | |
| | | | |
| 12 | 21 | $d_1$ (12,21) | $\gamma_1$ (12,21) |
| 12 | 22 | $d_1$ (12,22) | $\gamma_1$ (12,22) |
| | | | |
| | | | |
| | | | |
| | | | |
| 18 | 28 | $d_1$ (18,28) | $\gamma_1$ (18,28) |

Fig.5